# EUROPÄISCHE PATENTANMELDUNG

(11) **EP 1 655 506 A2**
(43) Veröffentlichungstag der Anmeldung: **10.05.2006**
(21) Anmeldenummer: 05109435.7
(22) Anmeldetag: 11.10.2005
(51) Int. Cl.: F16D 65/21

(54) **Scheibenbremse**

(30) Priorität: 09.11.2004 DE 102004054013
(71) Anmelder: ROBERT BOSCH GMBH, 70442 Stuttgart (DE)
(72) Erfinder: Baumann, Dietmar, 71282, Hemmingen (DE); Hofmann, Dirk, 71636, Ludwigsburg (DE); Vollert, Herbert, 71665, Vaihingen/Enz (DE); Nagel, Willi, 71686, Remseck/Hochdorf (DE); Henke, Andreas, 34474, Diemelstadt (DE); Foitzik, Bertram, 71636, Ludwigsburg (DE); Goetzelmann, Bernd, 71696, Moeglingen (DE)

(57) **Zusammenfassung**

Die Erfindung betrifft eine selbstverstärkende, elektromechanische Scheibenbremse (10). Die Erfindung schlägt vor, dass ein Reibwert zwischen einem Reibbremsbelag (16, 18) und einer Bremsscheibe (12) der Scheibenbremse (10) kleiner ist als ein Reibwert zwischen dem Reibbremsbelag (16, 18) bzw. seinem Belagträger (26) und einem Bremsenrahmen (14) bzw. einer Rampenplatte (34), an den/der der Reibbremsbelag (18) befestigt ist. Eine beim Bremsen von der Bremsscheibe (12) auf den Reibbremsbelag (16, 18) ausgeübte Reibungskraft wird dadurch kraftschlüssig (reibschlüssig) auf den Bremsenrahmen (14) bzw. die Rampenplatte (34) übertragen, eine formschlüssige Halterung der Reibbremsbeläge (16, 18) wird dadurch entlastet und dient im Wesentlichen einer Sicherung der Reibbremsbeläge (16, 18) im Bremsenrahmen (14).

## Beschreibung

### Stand der Technik

Die Erfindung betrifft eine Scheibenbremse, insbesondere für Kraftfahrzeuge, mit den Merkmalen des Oberbegriffs des Anspruchs 1.

Aus der DE-100 56 451 A 1 ist eine Scheibenbremse mit elektromechanischer Betätigungseinrichtung und einer mechanischen Selbstverstärkungseinrichtung bekannt. Die Betätigung könnte prinzipiell auch in anderer Weise, beispielsweise pneumatisch oder hydraulisch erfolgen. Die Selbstverstärkungseinrichtung weist einen Keilmechanismus mit einer schräg in einem insbesondere spitzen Winkel zu einer Bremsscheibe verlaufenden Keilfläche zur Abstützung eines Reibbremsbelags der Scheibenbremse auf. Ändert sich ein Keilwinkel über die Länge der Keilfläche, spricht man auch von einem Rampenmechanismus. Zum Bremsen wird der Reibbremsbelag von der Betätigungseinrichtung gegen die drehende Bremsscheibe gedrückt. Die drehende Bremsscheibe übt eine Reibungskraft in Umfangsrichtung auf den Reibbremsbelag aus, die den Reibbremsbelag in Richtung eines enger werdenden Keilspalts zwischen der Keilfläche und der Bremsscheibe beaufschlagt. Gemäß dem Keilprinzip bewirkt die Keilfläche, an der sich der Reibbremsbelag abstützt, eine Kraft auf den Reibbremsbelag mit einer Komponente senkrecht zur Bremsscheibe. Die zur Bremsscheibe senkrechte Kraftkomponente ist eine Andruckkraft, die den Reibbremsbelag zusätzlich zu einer von der Betätigungseinrichtung aufgebrachten Andruckkraft gegen die Bremsscheibe drückt. Die Bremskraft wird verstärkt. Die Selbstverstärkungseinrichtung wandelt die beim Bremsen von der drehenden Bremsscheibe auf den gegen sie gedrückten Reibbremsbelag ausgeübte Reibungskraft in eine Andruckkraft. Die nachfolgend zu erläuternde Erfindung ist zwar für Scheibenbremsen mit einer mechanischen, einen Keil- oder Rampenmechanismus aufweisenden Selbstverstärkungseinrichtung aufweisende Scheibenbremsen vorgesehen, jedoch nicht auf solche Scheibenbremsen beschränkt.

### Erläuterung und Vorteile der Erfindung

Bei der erfindungsgemäßen Scheibenbremse mit den Merkmalen des Anspruchs 1 weist der Reibbremsbelag an einer der Bremsscheibe abgewandten Rückseite einen größeren Reibwert mit einem Reibbremsbelaghalter als an einer der Bremsscheibe zugewandten Vorderseite des Reibbremsbelags mit der Bremsscheibe auf. Dabei ist unter Reibbremsbelag der Reibbremsbelag als solches bzw. die Baueinheit des Reibbremsbelags mit einem Belagträger, mit dem der Reibbremsbelag üblicherweise stoffschlüssig und unlösbar verbunden ist, zu verstehen. Als Reibbremsbelaghalter ist das Teil der Scheibenbremse anzusehen, an dem der Reibbremsbelag (mit dem Belagräger) angebracht ist. Es kann sich um einen Bremssattel bzw. Bremsenrahmen oder beispielsweise um einen Keil eines Keilmechanismus einer Selbstverstärkungseinrichtung der Scheibenbremse handeln, wobei der Reibbremsbelag an einer der Bremsscheibe zugewandten Seite des Keils angeordnet ist.

Durch den erfindungsgemäß zwischen dem Reibbremsbelag und dem Reibbremsbelaghalter größeren Reibwert als zwischen dem Reibbremsbelag und der Bremsscheibe ist bei betätigter Scheibenbremse eine von der drehenden Bremsscheibe auf den Reibbremsbelag ausgeübte Reibungskraft kleiner als eine vom Reibbremsbelaghalter auf den Reibbremsbelag ausgeübte Reibungskraft. Der Reibbremsbelag wird dadurch am Reibbremsbelaghalter gehalten und bewegt sich nicht mit der drehenden Bremsscheibe mit. Theoretisch wäre dadurch eine formschlüssige Halterung des Reibbremsbelags entbehrlich, in der Praxis dürfte eine formschlüssige oder sonstige Halterung des Reibbremsbelags zusätzlich zum Kraftschluss durch den Reibwert unentbehrlich sein. Trotzdem hat die Erfindung den Vorteil, dass eine beim Bremsen von der Bremsscheibe auf den Reibbremsbelag ausgeübte Reibungskraft wegen des Reibwerts kraftschlüssig oder jedenfalls zu einem großen Teil kraftschlüssig auf den Reibbremsbelaghalter übertragen wird. Die formschlüssige Halterung des Reibbremsbelags ist dadurch entlastet, sie wirkt als Sicherung und ist auch bei gelöster, d. h. nicht betätigter Scheibenbremse erforderlich. Weiterer Vorteil der Erfindung ist eine Spielfreiheit des Reibbremsbelags beim Bremsen, da der Kraftschluss (Reibschluss) in jeder Lage des Reibbremsbelags relativ zum Reibbremsbelaghalter wirksam ist und der Reibbremsbelag in Folge dessen nicht erst wie bei einem Formschluss an einem Widerlager oder dgl. zur Anlage kommen muss.

Die Unteransprüche haben vorteilhafte Ausgestaltungen und Weiterbildungen der im Anspruch 1 angegebenen Erfindung zum Gegenstand.

### Zeichnung

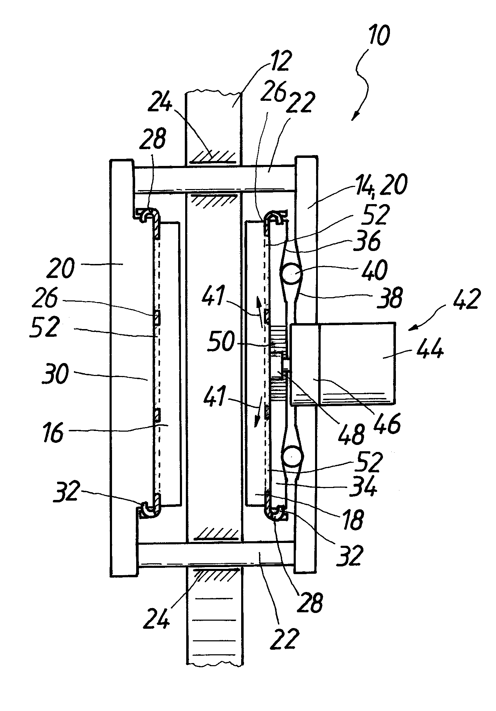

Die Erfindung wird nachfolgend anhand eines in der Zeichnung dargestellten Ausführungsbeispiels näher erläutert. Die einzige Figur zeigt eine schematisierte und vereinfachte Darstellung einer erfindungsgemäßen Scheibenbremse mit Blickrichtung radial von außen auf eine Bremsscheibe.

### Beschreibung des Ausführungsbeispiels

Die in der Zeichnung dargestellte, erfindungsgemäße Scheibenbremse 10 weist eine Bremsscheibe 12 und einen Bremsenrahmen 14 auf, in dem zwei Reibbremsbeläge 16, 18 beiderseits der Bremsscheibe 12 angeordnet sind. Der Bremsenrahmen 14 weist zwei Rahmenplatten 20 auf, die mit Ankerstangen 22 miteinander verbunden sind. Die Rahmenplatten 20 sind parallel zur Bremsscheibe 12 beiderseits seitlich neben der Bremsscheibe 12 angeordnet, die be 12 beiderseits seitlich neben der Bremsscheibe 12 angeordnet, die Ankerstangen 22 verlaufen quer zur Bremsscheibe 12 außerhalb ihres Umfangs. Die Ankerstangen 22 sind in einem nicht dargestellten Bremsenhalter quer zur Bremsscheibe 12 verschiebbar geführt. Vom Bremsenhalter sind in der Zeichnung lediglich Führungen 24 für die Ankerstangen 22 symbolisch dargestellt. Der Bremsenrahmen 14 ist dadurch quer zur Bremsscheibe 12 verschieblich, es handelt sich um einen sog. Schwimmrahmen. Die beiden Reibbremsbeläge 16, 18 sind an der Bremsscheibe 12 zugewandten Seiten der Rahmenplatten 20 angeordnet.

Der in der Zeichnung links dargestellte, nachfolgend auch als feststehend bezeichnete Reibbremsbelag 16 ist fest, d. h. unbeweglich im Bremsenrahmen 14 angeordnet. Der Reibbremsbelag 16 weist einen Belagträger 26 auf, der als Tiefziehteil aus Blech hergestellt ist und einen umlaufenden, in Richtung der Rahmenplatte 20 abstehenden Rand 28 aufweist. Der Reibbremsbelag 16 ist stoffschlüssig mit dem Belagträger 26 verbunden. Der Belagträger 26 umgreift mit seinem Rand 28 eine korrespondierende Erhöhung 30 der Rahmenplatte 20. Der Rand 28 des Belagträgers 26 weist nach innen stehende, federnde Befestigungslaschen 32 auf, die komplementäre Ausnehmungen an einem Außenrand der Erhöhung 30 der Rahmenplatte 20 hintergreifen. Dadurch ist eine Art Clip- oder Schnappverbindung gebildet, die den Belagträger 26 mit dem Reibbremsbelag 16 an der Rahmenplatte 20 hält.

Auf einer der Bremsscheibe 12 zugewandten Vorderseite des Reibbremsbelags 16 ist ein Reibwert zwischen dem Reibbremsbelag 16 und der Bremsscheibe 12 niedriger auf einer der Bremsscheibe 12 abgewandten Rückseite, wo der Reibwert zwischen dem Belagträger 26 und der Rahmenplatte 20 des Bremsenrahmens 14 größer ist. Wird der Reibbremsbelag 16 zum Bremsen gegen die drehende Bremsscheibe 12 gedrückt, ist dadurch eine von der Bremsscheibe 12 auf den Reibbremsbelag 16 ausgeübte Reibungskraft kleiner als eine zwischen dem Belagträger 26 und der Rahmenplatte 20 wirkende Reibungskraft. Der Reibbremsbelag 16 wird deswegen durch Kraftschluss (Reibschluss) im Bremsenrahmen 14 gehalten. Die Halterung des Reibbremsbelags 16 durch den Formschluss des Randes 28 des Belagträgers 26 mit der Rahmenplatte 20 ist von untergeordneter Bedeutung, er dient der zusätzlichen Sicherung des Reibbremsbelags 16 im Bremsenrahmen 14 und der Halterung des Reibbremsbelags 16 bei nicht betätigter Scheibenbremse 10. Die reibschlüssige Halterung des Reibbremsbelags 16 im Bremsenrahmen 14 ist spielfrei.

Der andere, in der Zeichnung rechts dargestellte Reibbremsbelag 18 ist in Umfangsrichtung der Bremsscheibe 12 im Bremsenrahmen 14 verschiebbar. Der verschiebbare Reibbremsbelag 18 ist in gleicher Weise wie der feststehende Reibbremsbelag 16 gehalten, allerdings nicht unmittelbar im Bremsenrahmen 14, sondern an einer Rampenplatte 34. Wie der feststehende Reibbremsbelag 16 ist auch der verschiebbare Reibbremsbelag 18 fest durch Stoffschluss mit einem Belagträger 26 verbunden. Der Belagträger 26 ist ein Tiefziehteil aus Blech mit einem umlaufenden, in Richtung von der Bremsscheibe 12 weg abstehenden Rand 28. Vom Rand 28 stehen federnde Befestigungslaschen 32 nach innen ab, die Ausnehmungen in der Rampenplatte 34 hintergreifen. Der Belagträger 26 und mit ihm der Reibbremsbelag 18 sind auf diese Weise mit einer Clip- oder Schnappverbindung an der Rampenplatte 34 befestigt.

Auf ihrer der Bremsscheibe 12 abgewandten Rückseite weist die Rampenplatte 34 muldenartige, in Umfangsrichtung der Bremsscheibe 12 verlaufende Vertiefungen auf, die Rampenbahnen 36 bilden. Die Rampenbahnen 36 steigen in beiden Umfangsrichtungen der Bremsscheibe 12 in einem spitzen Winkel zur Bremsscheibe 12 an. Die Rahmenplatte 20 des Bremsenrahmens 14 auf der Seite des verschiebbaren Reibbremsbelags 18 weist auf ihrer der Bremsscheibe 12 und damit der Rampenplatte 34 zugewandten Seite zu den Rampenbahnen 36 der Rampenplatte 34 gegengleiche Rampenbahnen 38 auf. In den Rampenbahnen 36, 38 sind Rollen 40 als Wälzkörper angeordnet, die bei einer Verschiebung des Reibbremsbelags 18 in Umfangsrichtung der Bremsscheibe 12 auf einander diagonal gegenüberliegenden Abschnitten der Rampenbahnen 36, 38 der Rampenplatte 34 und der Rahmenplatte 20 wälzen. Die Rampenbahnen 36, 38 verlaufen vorzugsweise schraubenlinienförmig koaxial zu einer gedachten Drehachse der Bremsscheibe 12.

Zur Betätigung der Scheibenbremse 10 wird der verschiebbare Reibbremsbelag 18 in Drehrichtung der Bremsscheibe 12 verschoben. Die Wälzkörper 40 wälzen auf den diagonal gegenüberliegenden Abschnitten der Rampenbahnen 36, 38, und der Reibbremsbelag 18 bewegt sich schraubenlinienförmig gegen die Bremsscheibe 12. Die drehende Bremsscheibe 12 übt eine Reibungskraft in Umfangsrichtung auf den gegen sie gedrückten Reibbremsbelag 18 aus, also in der Verschieberichtung des Reibbremsbelags 18. Die Reibungskraft, die in gleicher Größe und Richtung auch die Rampenplatte 34 beaufschlagt, bewirkt gemäß dem Keilprinzip über die Abstützung mit den Rollen 40 an den Rampenbahnen 36, 38 eine Kraft senkrecht zu den Rampenbahnen 36, 38. Diese Kraft weist eine Kraftkomponente senkrecht zur Bremsscheibe 12 auf, die den Reibbremsbelag 18 zusätzlich gegen die Bremsscheibe 12 drückt und auf diese Weise die Andruckkraft des Reibbremsbelags 18 gegen die Bremsscheibe 12 erhöht und damit eine Bremskraft der Scheibenbremse 10 verstärkt. Der Rampenmechanismus mit den Rampenbahnen 36, 38 und den Rollen 40 bildet eine mechanische Selbstverstärkungseinrichtung, die eine bei betätigter Scheibenbremse 10 von der drehenden Bremsscheibe 12 auf den verschiebbaren Reibbremsbelag 18 ausgeübte Reibungskraft in eine Andruckkraft wandelt, die den Reibbremsbelag 18 gegen die Bremsscheibe 12 drückt und die Bremskraft der Scheibenbremse 10 erhöht. Da die Rampenbahnen 36, 38 in beiden Umfangsrichtungen der Bremsscheibe 12 ansteigen, weist die Scheibenbremse 10 eine Bremskraftverstärkung für beide Drehrichtungen der Bremsscheibe 12 auf. Zur Betätigung der Scheibenbremse 10 wird der verschiebbare Reibbremsbelag 18 immer in Drehrichtung der Bremsscheibe 12 verschoben. Die Rampenbahnen 36, 38 können in beiden Umfangsrichtungen gleiche oder unterschiedliche Steigungen aufweisen, in letzterem Fall ist die Selbstverstärkung der Scheibenbremse 10 in beiden Drehrichtungen der Bremsscheibe 12 unterschiedlich, d. h. die Selbstverstärkung ist bei Vor- und Rückwärtsfahrt verschieden. Weisen die Rampenbahnen 36, 38 in einer Umfangsrichtung eine konstante Steigung über ihre Länge auf, werden sie auch als Keilbahnen bezeichnet. Ändert sich eine Steigung der Rampenbahnen 36, 38 über ihre Länge, ändert sich damit auch die Selbstverstärkung. Durch eine zum Ende der Rampenbahnen 36, 38 kleiner werdende Steigung wird die Bremskraftverstärkung bei großer Bremskraft erhöht.

Für den verschiebbaren Reibbremsbelag 18 gilt ebenso wie für den feststehenden Reibbremsbelag 16, dass sein Reibwert mit der Bremsscheibe 12 auf der der Bremsscheibe 12 zugewandten Vorderseite des Reibbremsbelags 18 kleiner ist als der Reibwert zwischen seinem Belagträger 26 und der Rampenplatte 34 auf der der Bremsscheibe 12 abgewandten Rückseite des Reibbremsbelags 18. Kräfte in Umfangsrichtung, insbesondere also die beim Bremsen von der drehenden Bremsscheibe 12 auf den Reibbremsbelag 18 ausgeübte Reibungskraft, werden in Folge dessen auch beim verschiebbaren Reibbremsbelag 18 durch Kraftschluss (Reibschluss) auf die Rampenplatte 34 übertragen, der Formschluss zwischen dem Belagträger 26 und der Rampenplatte 34 ist von untergeordneter Bedeutung und dient vor allem der Sicherung des Reibbremsbelags 18 an der Rampenplatte 34 und der Halterung des Reibbremsbelags 18 bei gelöster Scheibenbremse 10.

Die Belagträger 26 beider Reibbremsbeläge 16, 18 sind mit Ausnehmungen 52 versehen, so dass die beiden Reibbremsbeläge 16 unmittelbar an den Reibbremsbelaghaltern anliegen, die von Rahmenplatte 20 bzw. ihrer Erhöhung 30 einerseits und von der Rampenplatte 34 andererseits gebildet werden. Die Ausnehmungen 52 können beispielsweise als Ausstanzungen ausgeführt sein. Es wird dadurch der verglichen mit den Belagträgern 26 üblicherweise größere Reibwert der Reibbremsbeläge 16, 18 ausgenützt. Um den gewünscht hohen Reibwert zu erreichen können die der Bremsscheibe 12 abgewandten Rückseiten der Reibbremsbeläge 16, 18 zumindest innerhalb der Ausnehmungen 52 reibwerterhöhend oberflächenbehandelt sein, beispielsweise eine reibwerterhöhende Beschichtung aufweisen.

Die Scheibenbremse 10 weist eine elektromechanische Betätigungseinrichtung 42 mit einem Elektromotor 44 mit angeflanschtem Untersetzungsgetriebe 46 auf. Ein Ritzel 48 auf einer Antriebswelle des Getriebes 46 kämmt mit einer Verzahnung 50 an einem äußeren oder inneren Umfangsrand der Rampenplatte 34.

Die Rampenplatte 34 bildet einen Reibbremsbelaghalter für den verschiebbaren Reibbremsbelag 18, der Bremsenrahmen 14 bildet mit seiner Rahmenplatte 20 bzw. ihrer Erhöhung 30 einen Reibbremsbelaghalter für den feststehenden Reibbremsbelag 16.

## Patentansprüche

1. Scheibenbremse, mit einer Bremsscheibe (12), mit einem Reibbremsbelaghalter (14, 20, 30, 34), mit einem Reibbremsbelag (16, 18), der am Reibbremsbelaghalter (14, 20, 30, 34) gehalten ist, und mit einer Betätigungseinrichtung (42), mit der der Reibbremsbelag (16, 18) zum Bremsen gegen die Bremsscheibe (12) drückbar ist, **dadurch gekennzeichnet, dass** ein Reibwert des Reibbremsbelags (16, 18) mit dem Reibbremsbelaghalter (14, 20, 30, 34) auf einer der Bremsscheibe (12) abgewandten Rückseite des Reibbremsbelags (16, 18) größer als ein Reibwert des Reibbremsbelags (16, 18) mit der Bremsscheibe (12) auf einer der Bremsscheibe (12) zugewandten Vorderseite des Reibbremsbelags (16, 18) ist.

2. Scheibenbremse nach Anspruch 1, **dadurch gekennzeichnet, dass** der Reibbremsbelag (16, 18) einen Belagträger (26) aufweist, mit dem er am Reibbremsbelaghalter (14, 20, 30, 34) befestigt ist, und dass der .Reibbremsbelaghalter (14, 20, 30, 34) eine Ausnehmung (52) aufweist, so dass der Reibbremsbelag (16, 18) unmittelbar am Reibbremsbelaghalter (14, 20, 30, 34) anliegt.

3. Scheibenbremse nach Anspruch 1, **dadurch gekennzeichnet, dass** die Scheibenbremse (10) eine elektromechanische Betätigungseinrichtung (42) aufweist.

4. Scheibenbremse nach Anspruch 1, **dadurch gekennzeichnet, dass** die Scheibenbremse (10) eine Selbstverstärkungseinrichtung (36, 38, 40) aufweist, die eine bei betätigter Scheibenbremse (10) von der drehenden Bremsscheibe (12) auf den gegen sie gedrückten Reibbremsbelag (18) ausgeübte Reibungskraft in eine Andruckkraft wandelt, die den Reibbremsbelag (18) gegen die Bremsscheibe (12) drückt.
